# EUROPÄISCHE PATENTSCHRIFT

(11) **EP 1 991 409 B1**
(45) Veröffentlichungstag und Bekanntmachung des Hinweises auf die Patenterteilung: **28.02.2018**
(21) Anmeldenummer: 07701914.9
(22) Anmeldetag: 05.03.2007
(51) Int. Cl.: B29C 47/10, B29C 31/10

(54) **HERSTELLUNG VON ARTIKELN MIT VERSCHIEDENEM GEHALT AN ZUSATZSTOFFEN**
PRODUCTION OF ARTICLES WITH VARYING CONTENT OF ADJUNCTS
PRODUCTION D'ARTICLES PRÉSENTANT DIFFÉRENTES TENEURS EN ADJUVANTS

(30) Priorität: 09.03.2006 DE 102006011362
(43) Veröffentlichungstag der Anmeldung: 19.11.2008
(73) Patentinhaber: Bühler AG, 9240 Uzwil (CH)
(72) Erfinder: MEYER, Markus, CH-9322 Egnach (CH); SCHÄR, Richard, CH-9303 Wittenbach (CH); GUTMANN, Christian, CH-9524 Zuzwil (CH)
(74) Vertreter: Hepp Wenger Ryffel AG
(86) Internationale Anmeldenummer: PCT/CH2007/000114
(87) Internationale Veröffentlichungsnummer: WO 2007/101359

(56) Entgegenhaltungen:
- US-A- 5 935 514
- US-A1- 2002 137 838
- US-A1- 2004 206 246
- US-B1- 6 386 748

## Beschreibung

Die Erfindung bezieht sich auf ein Verfahren zum kontinuierlichen Herstellen einer mindestens zwei unterschiedliche Sorten von Artikeln aufweisenden Vielzahl von Artikeln aus einer pastösen Masse, gemäß Anspruch 1. Derartige Vorrichtung besitzen üblicherweise eine Prozesseinheit mit Förderelementen zum Verarbeiten und Fördern der Masse, eine Zufuhreinheit zum Zuführen der Masse in die Prozesseinheit, eine Dosiereinheit zum Eindosieren eines Zusatzstoffes in die durch die Prozesseinheit hindurch geförderte Masse, eine Mischeinheit mit Mischelementen förderabseitig von der Prozesseinheit zum Einmischen des eindosierten Zusatzstoffes in die Masse sowie eine Formeinheit mit Formelementen förderabseitig von der Mischeinheit zum Formen der mit einem Zusatzstoff versehenen Masse zu einzelnen Artikeln, siehe US 2004/0206246 A1. Bei den Artikeln kann es sich z.B. um kleine, handliche Gebrauchsartikel oder Verzehrprodukte handeln, die aus einem beliebigen Material bestehen, das sich in einem pastösen oder teigartigen Zustand verarbeiten und zu einzelnen Gegenständen/Artikeln formen und schliesslich verfestigen lässt.

Je nach Art und/oder Menge des eindosierten Zusatzstoffes, z.B. eines Farbstoffes oder eines Aromastoffes, erhält man dann eine Vielzahl von Artikeln, die sich aufgrund ihrer unterschiedlichen Zudosierung voneinander unterscheiden.

Speziell bei kleinen Massen-Gebrauchsartikeln ist es oft wünschenswert, eine Vielzahl solcher z.B. unterschiedlich gefärbter Gebrauchsartikel in einer Sammelverpackung unterzubringen, um deren Attraktivität für einen potentiellen Käufer zu erhöhen.

Genauso verhält es sich bei Verzehrprodukten. Diese bestehen üblicherweise aus einem verdaubaren Grundstoff, der in der Regel Stärke und/oder Protein aufweist und gefärbt und/oder aromatisiert ist. Auch hier ist es oft wünschenswert, eine Vielzahl solcher z.B. unterschiedlich gefärbter und eine bestimmte Geschmacksrichtung suggerierende Gebrauchsartikel in einer Sammelverpackung unterzubringen, um deren Attraktivität für einen potentiellen Käufer zu erhöhen.

Um solche Mischpackungen aus schüttgutartigen Gebrauchsartikeln oder Verzehrprodukten herzustellen, werden in der Regel verschiedene Sorten der betreffenden Artikel gesondert hergestellt und anschliessend miteinander vermischt.

Dieser Mischvorgang kann recht aufwändig sein und sogar zu einer Beschädigung (Bruch, Abrieb) der einzelnen Artikel während des Mischens führen, so dass man in den Mischpackungen nicht nur beschädigte Artikel, sondern auch gröbere und feinere Bruchstücke bzw. Abrieb von den einzelnen Artikeln vorfinden kann.

Der Erfindung liegt daher die Aufgabe zugrunde, die mit dem Mischvorgang bei der Herstellung der eingangs genannten Mischpackung auftretenden Nachteile zu beseitigen oder zumindest zu verringern.

Diese Aufgabe wird durch das Verfahren gemäss Anspruch 1 zum kontinuierlichen Herstellen einer mindestens zwei unterschiedliche Sorten von Artikeln aufweisenden Vielzahl von Artikeln aus einer pastösen Masse gelöst.

Die erfindungsgemässe Verfahren verwendet eine Prozesseinheit mit Förderelementen zum Verarbeiten und Fördern der Masse, eine Zufuhreinheit zum Zuführen der Masse in die Prozesseinheit, eine Dosiereinheit zum Eindosieren eines Zusatzstoffes in die durch die Prozesseinheit hindurch geförderte Masse, eine Mischeinheit mit Mischelementen förderabseitig von der Prozesseinheit zum Einmischen des eindosierten Zusatzstoffes in die Masse sowie eine Formeinheit mit Formelementen förderabseitig von der Mischeinheit zum Formen der mit einem Zusatzstoff versehenen Masse zu einzelnen Artikeln.

Erfindungsgemäss ist die Dosiereinheit über mindestens eine Schalteinheit mit mindestens einer Quelle für einen jeweiligen Zusatzstoff verbunden, und eine jeweilige Schalteinheit ist in einen jeweiligen Schaltzustand schaltbar, in welchem die Dosiereinheit den jeweiligen Zusatzstoff mit einer jeweiligen Dosierrate (dosierte Masse Zusatzstoff pro Sekunde) in die Masse eindosieren kann.

Bei dem erfindungsgemässen Verfahren erfolgen ein Zuführen der Masse mittels einer Zufuhreinheit in eine Prozesseinheit, ein Fördern und Verarbeiten der Masse durch die Prozesseinheit hindurch, ein Eindosieren eines Zusatzstoffes mittels einer Dosiereinheit in die durch die Prozesseinheit hindurch geförderte Masse, ein Einmischen des eindosierten Zusatzstoffes in die Masse mittels einer Mischeinheit mit Mischelementen förderabseitig von der Prozesseinheit sowie ein Formen der mit dem Zusatzstoff versehenen Masse zu einzelnen Artikeln mittels einer Formeinheit mit Formelementen förderabseitig von der Mischeinheit.

Erfindungsgemäss findet das Eindosieren von Zusatzstoff in einer mindestens zwei verschiedene Dosierzustände aufweisenden Abfolge von Dosierzuständen statt, wobei die Dosiereinheit in einem jeweiligen Dosierzustand den Zusatzstoff mit einer jeweiligen Dosierrate (dosierte Masse Zusatzstoff pro Sekunde) in die Masse eindosiert.

Durch das relativ späte Einmischen eines oder mehrerer Zusatzstoffe mittels einer Mischeinheit mit Mischelementen förderabseitig von der Prozesseinheit, in der die eigentliche Verarbeitung der Masse erfolgt, und das Eindosieren von Zusatzstoff in einer mindestens zwei verschiedene Dosierzustände aufweisenden Abfolge von Dosierzuständen erreicht man, dass am Ende des erfindungsgemässen Verfahrens zumindest zwei verschiedene Sorten eines Artikels in wechselnder Abfolge kontinuierlich hergestellt werden. Dies hat zur Folge, dass die so hergestellten unterschiedlichen Artikel in einer der Formeinheit nachgeschalteten weiteren Behandlungseinheit schon vorgemischt angeliefert werden.

Während eines anschliessenden, z.B. in einer nachgeschalteten Behandlungseinheit stattfindenden Mischvorgangs ist daher viel weniger Mischaufwand notwendig, um eine gleichmässige Durchmischung der mindestens zwei Sorten von Artikeln zu erzielen.

Diese werden daher bei einem solchen Mischvorgang viel weniger stark strapaziert und erleiden praktisch keine Beschädigungen. Ausserdem entsteht sehr viel weniger Bruch und Abrieb. So lassen sich definierte Mengen gut durchmischter und dennoch weitgehend unbeschädigter Artikel in attraktiven Mischpackungen verpacken. Solche Mischpackungen sind entweder vollständig transparent oder weisen ein Sichtfenster auf.

Andererseits kann man aber auch die in wechselnder Abfolge kontinuierlich hergestellten mindestens zwei Sorten von Artikeln bei der anschliessenden Behandlung in ihrer Anordnung unverändert lassen und, ohne diese Reihenfolge zu verändern, unmittelbar in eine Mischpackung einfüllen. So lassen sich definierte Mengen in einem bestimmten Muster angeordneter und praktisch unbeschädigter Artikel in den genannten Mischpackungen verpacken.

Bei der angewandten Vorrichtung kann es sich um eine Vorrichtung zur kontinuierlichen Herstellung von Gebrauchsgegenständen aus einem verfestigten Polymermaterial (Polyester, Polyamid, Polycarbonat, etc.) handeln, bei der die Prozesseinheit mit den Förderelementen eine Compoundier-Einheit für Polymermaterialien ist.

Alternativ kann es sich um eine Vorrichtung zur kontinuierlichen Herstellung von Gebrauchsgegenständen aus einem verfestigten Keramikmaterial handeln, bei der die Prozesseinheit mit Förderelementen eine Compoundier-Einheit für Keramikmaterialien Auch hier kann man die weiter oben geschilderten Vorteile voll ausnutzen.

Die angewandte Vorrichtung kann auch eine Vorrichtung zur kontinuierlichen Herstellung von Verzehrprodukten aus einer angefeuchteten stärke- und/oder proteinhaltigen Rohmaterial-Masse sein. In diesem Fall ist die Prozesseinheit mit Förderelementen eine Kochextrusions-Einheit für stärke- und/oder proteinhaltige Materialien oder eine Kaltextrusions-Einheit für stärke- und/oder proteinhaltige Materialien.

Besonders hier erweist sich die erfindungsgemässe Vorgehensweise als besonders vorteilhaft, da kochextrudierte oder kaltextrudierte Produkte nach ihrer Verfestigung in der Regel brüchig oder bröselig sind.

Vorzugsweise ist bei der angewandten Vorrichtung die Dosiereinheit über eine Schalteinheit mit mindestens einer Quelle für einen Zusatzstoff verbunden, wobei die Schalteinheit in einen ersten Schaltzustand, in welchem die Dosiereinheit den Zusatzstoff mit einer ersten Dosiermenge in die Masse eindosieren kann, und in einen zweiten Schaltzustand, in welchem die Dosiereinheit den Zusatzstoff mit einer zweiten Dosiermenge in die Masse eindosieren kann, schaltbar ist. Dadurch lassen sich gezielte Abfolgen wechselnder Artikel erzeugen.

Vorzugsweise ist bei der angewandten Vorrichtung die Dosiereinheit über die Schalteinheit mit einer ersten Quelle für einen ersten Zusatzstoff und mit einer zweiten Quelle für einen zweiten Zusatzstoff verbunden, wobei die Schalteinheit in einen ersten Schaltzustand, in welchem die Dosiereinheit ein erstes Dosiermengen-Mischungsverhältnis aus dem ersten und dem zweiten Zusatzstoff in die Masse eindosieren kann, und in einen zweiten Schaltzustand, in welchem die Dosiereinheit ein zweites Dosiermengen-Mischungsverhältnis aus dem ersten und dem zweiten Zusatzstoff in die Masse eindosieren kann, schaltbar ist. Dadurch lassen sich spezielle Mischungsdosierungen und somit ganz individuelle Produkteigenschaften einstellen. Bei einer vorteilhaften Ausführung ist die Schalteinheit in einen dritten Schaltzustand schaltbar, in welchem die Dosiereinheit ein drittes Dosiermengen-Mischungsverhältnis aus dem ersten und dem zweiten Zusatzstoff in die Masse eindosieren kann.

Insbesondere kann dabei in einem ersten Schaltzustand nur eine erste Sorte Zusatzstoff mit einer ersten Dosiermenge eindosiert werden und in einem zweiten Schaltzustand nur eine zweite Sorte Zusatzstoff mit einer zweiten Dosiermenge eindosiert werden, wobei vorzugsweise in einem dritten Schaltzustand eine erste Sorte Zusatzstoff und eine zweite Sorte Zusatzstoff gleichzeitig mit der ersten Dosiermenge bzw. mit der zweiten Dosiermenge eindosiert werden kann.

Die Prozesseinheit mit Förderelementen kann eine Schneckenpresse bzw. ein Einwellen-Extruder oder ein Mehrwellen-Extruder sein.

Als Mischeinheit wird vorzugsweise ein Mischkneter verwendet, der zumindest in Teilbereichen entlang der Förderrichtung seines Mischraumes Förderelemente aufweist. Besonders bevorzugt ist hierfür ein Mehrwellen-Extruder, insbesondere ein Zweiwellen-Extruder, mit dem man auch über kurze Mischlängen eine gute Einmischung des Zusatzstoffes erzielt.

Zweckmässigerweise besitzt die Mischeinheit entlang einer axialen Förderrichtung einen Teilbereich mit Knetelementen, insbesondere mit Polygonblöcken oder Igeln. Vorzugsweise besitzt die Mischeinheit entlang einer axialen Förderrichtung einen Teilbereich mit Förderelementen, insbesondere mit Schneckenelementen. Die Mischeinheit kann neben vorwärts fördernden auch rückwärts fördernde Schneckenelemente aufweisen. Dadurch wird ermöglicht, dass innerhalb der Mischeinheit nicht nur ein Einmischen von Zusatzstoffen ermöglicht wird, sondern gleichzeitig eine Abdichtung der weiter förderabseitig gelegenen Abschnitte der Vorrichtung gegen den Prozessdruck in der Prozesseinheit erreicht wird.

Vorzugsweise ist die Formeinheit unmittelbar förderabseitig von der Mischeinheit angeordnet, um eine möglichst schmales Verweilzeitspektrum der zudosierten Zusatzstoffe in der Formeinheit zu gewährleisten. Ein taktartiges Eindosieren von Zusatzstoffen (z.B. Farbstoffe) führt dann zu scharfen Übergängen zwischen den wechselnden Abfolgen unterschiedlicher (z.B. unterschiedlich gefärbter) Artikel nach der Formeinheit.

Vorzugsweise ist der Prozessraum der Formeinheit sowie der Übergang von dem Prozessraum der Mischeinheit zu der Formeinheit totvolumenfrei ausgebildet. Dadurch werden ebenfalls Verschleppungen von Zusatzstoffen in der Masse verhindert, was ebenfalls zu den genannten scharfen Übergängen zwischen den wechselnden Abfolgen unterschiedlicher Artikel nach der Formeinheit beiträgt. Vorzugsweise besitzt der Prozessraum der Formeinheit sowie der Übergang keine beweglichen Maschinen-Elemente. Auch dadurch werden Verschleppungen von Zusatzstoffen in der Masse verhindert, wodurch die genannten scharfen Übergänge zwischen den wechselnden Abfolgen unterschiedlicher Artikel nach der Formeinheit begünstigt werden. Insbesondere darf die Prozessraum-Innenwand der Formeinheit sowie des Übergangs keine Kanten aufweisen. Konkret bedeutet dies, dass die Prozessraum-Innenwand der Formeinheit sowie des Übergangs in allen Bereichen einen Krümmungsradius von mindestens 2 mm, vorzugsweise von mindestens 4 mm aufweisen sollte.

Vorteilhaft ist es auch, wenn der Prozessraum der Formeinheit sowie der Übergang von dem Prozessraum der Mischeinheit zu der Formeinheit Düsen zum Eindosieren eines Fluids aufweisen. Dadurch lassen sich Flüssigkeiten, wie z.B. Öl, Wasser, bestimmte Emulsionen, Lösungen oder Wachs, eindosieren, wodurch eine Verringerung der Wandreibung in der Formeinheit und somit eine Spülung erfolgt. Auch dies trägt zu einem schärferen Übergang zwischen den wechselnden Abfolgen unterschiedlicher Artikel bei. Vorzugsweise erfolgt die Fluid-Eindosierung impulsartig.

Die Prozessraum-Innenwand der Formeinheit sowie des Übergangs kann mit einer Antihaft-Beschichtung ausgekleidet sein, die insbesondere aus einem F-Atome oder Si-Atome aufweisenden Polymermaterial besteht.

Bei einer besonders vorteilhaften Ausführung ist die Dosiereinheit an die Mischeinheit angeschlossen, wobei die Dosiereinheit vorzugsweise in einem axialen Teilbereich der Mischeinheit angeschlossen ist, der in oder förderaufseitig (stromauf) von dem axialen Teilbereich mit den Knetelementen liegt. Besonders vorteilhaft ist es, wenn die Dosiereinheit in einem axialen Teilbereich der Mischeinheit angeschlossen ist, der unmittelbar förderaufseitig (stromauf) von dem axialen Teilbereich mit den Knetelementen liegt. Dies minimiert den Einfluss von Förderelementen, die zur Verschleppung beitragen, und maximiert den Einfluss der nicht (oder kaum) fördernden und weniger stark verschleppend wirkenden Mischelemente (Knetblöcke oder Igel), wodurch schon förderaufseitig von der Formeinheit jegliche Verschleppung gering gehalten wird.

Bei der Herstellung von Verzehrprodukten ist der Zufuhreinheit vorzugsweise ein Vorkonditionierer zum Anfeuchten eines zunächst trockenen stärke- und/oder proteinhaltigen Rohmaterial-Schüttgutes vorgeschaltet. In diesem kann das Rohmaterial beliebig stark benetzt werden und dann ausreichend lang verweilen, bis genug Wasser in das Rohmaterial eindiffundiert ist.

Zweckmässigerweise besitzt die Formeinheit eine Düse oder eine Vielzahl von Düsen und hat vorzugsweise ein Schneidmittel, insbesondere in Form einer rotierenden Schneidklinge oder eines rotierenden Fluidstrahls, das der Düse oder der Vielzahl von Düsen nachgeschaltet ist.

Je nach der Art der herzustellenden Artikel kann der Formeinheit noch mindestens eine weitere Bearbeitungseinheit nachgeschaltet sein. Dies kann z.B. eine oder eine Kombination der folgenden Bearbeitungseinheiten sein:
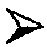 eine Trocknungskammer, insbesondere eine Wirbelbettkammer;
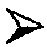 eine Expansionskammer;
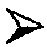 ein Flockierwalzwerk;
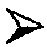 ein Flüssigkeitsbad, insbesondere ein heisses Ölbad;
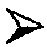 ein Unterwassergranulator.

Zweckmässigerweise ist der Formeinheit eine weitere Mischeinheit zum Durchmischen der mindestens zwei unterschiedliche Sorten von Artikeln aufweisenden Vielzahl von Artikeln nachgeschaltet. Dabei kann die Funktion dieser weiteren Mischeinheit auch durch eine Bearbeitungseinheit mit Mischcharakteristik, d.h. durch eine Bearbeitungseinheit mit grossem Verweilzeitspektrum gebildet sein.

Bei dem erfindungsgemässen Verfahren erfolgt vorzugsweise nach dem Formen der Artikel ein Verfestigen der Artikel. Besonders vorteilhaft ist es, wenn nach oder während des Verfestigens der einzelnen Artikel ein Durchmischen der verfestigten bzw. sich verfestigenden Artikel erfolgt. Dies kann z.B. in einer Expansionskammer oder Trocknungskammer erfolgen, die als Wirbelbett ausgebildet ist. Wegen der erfindungsgemäss als verschiedene Sorten in wechselnder Abfolge kontinuierlich hergestellten Artikel liegt nach dem Formen aber schon eine Grobmischung vor, so dass auch mit kurzen Verweilzeiten in der weiteren Misachvorrichtung gearbeitet werden kann.

Das erfindungsgemässe Verfahren kann zur kontinuierlichen Herstellung von Gebrauchsgegenständen aus einem Polymermaterial verwendet werden, wobei das Fördern und Verarbeiten des Materials als Polymerschmelze durch Compoundieren erfolgt.

Alternativ kann das erfindungsgemässe Verfahren zur kontinuierlichen Herstellung von Gebrauchsgegenständen aus einem Keramikmaterial verwendet werden, wobei das Fördern und Verarbeiten des Materials als Keramikpaste durch Compoundieren erfolgt.

Das erfindungsgemässe Verfahren kann auch zur kontinuierlichen Herstellung von Verzehrprodukten aus einer angefeuchteten stärke- und/oder proteinhaltigen Rohmaterial-Masse verwendet werden, wobei das Fördern und Verarbeiten der Rohmaterial-Masse durch Kochextrusion oder durch Kaltextrusion erfolgt. Dadurch kann man stärker bis praktisch vollständig gelatinisierte Verzehrprodukte (Snacks) bzw. schwächer oder praktisch ungelatinisierte Verzehrprodukte (Pasta) herstellen.

Vorzugsweise erfolgt das Eindosieren eines Zusatzstoffes in einer Abfolge von Dosierzuständen, wobei die Dosiereinheit in einem ersten Dosierzustand einen Zusatzstoff mit einer ersten Dosiermenge in die Masse eindosiert und die Dosiereinheit in einem zweiten Dosierzustand einen Zusatzstoff mit einer zweiten Dosiermenge in die Masse eindosiert. Insbesondere können beim Dosieren der erste Zustand und der zweite Zustand abwechselnd aufeinander folgen.

Vorzugsweise werden ein erster Zusatzstoff und ein zweiter Zusatzstoff eindosiert, wobei in einem ersten Zustand ein erstes Dosiermengen-Mischungsverhältnis aus dem ersten und dem zweiten Zusatzstoff in die Masse eindosiert wird und in einem zweiten Zustand ein zweites Dosiermengen-Mischungsverhältnis aus dem ersten und dem zweiten Zusatzstoff in die Masse eindosiert wird. Vorzugsweise wird in einem dritten Dosierzustand ein drittes Dosiermengen-Mischungsverhältnis aus dem ersten und dem zweiten Zusatzstoff in die Masse eindosiert. Insbesondere werden dabei in dem ersten Dosierzustand nur eine erste Sorte Zusatzstoff mit einer ersten Dosiermenge eindosiert und in dem zweiten Dosierzustand nur eine zweite Sorte Zusatzstoff mit einer zweiten Dosiermenge eindosiert. Alternativ können in dem dritten Dosierzustand die erste Sorte Zusatzstoff und die zweite Sorte Zusatzstoff gleichzeitig mit der ersten Dosiermenge bzw. mit der zweiten Dosiermenge eindosiert werden.

Bei einer bevorzugten Ausführung des erfindungsgemässen Verfahrens wird während eines jeweiligen Dosierzustands bzw. Dosierzyklusses die Dosiermenge pro Zeiteinheit konstant gehalten, wobei die Dosierleistung insbesondere den Verlauf eines Rechteck-Dosierimpulses aufweist. Dadurch und vorzugsweise in Verbindung mit den weiter oben genannten Massnahmen zur Erzielung scharfer Übergänge der Produkteigenschaften lassen sich scharfe, d.h. praktisch schlagartige Übergänge zwischen den kontinuierlich hergestellten wechselnden Abfolgen verschiedener Sorten eines Artikels erzielen.

Allgemeiner gesagt, ermöglicht die Erfindung aufgrund der geringen Verschleppung der eindosierten Zusatzstoffe eine beinahe getreue Übertragung der Dosierraten-Funktion der Dosiereinheit mit einer nur geringen "Verschmierung" auf den zeitlichen Verlauf der Produkteigenschaften der nach der Formeinheit ausgestossenen Artikel.

Daher lässt sich auch alternativ (in einer gegensätzlichen Ausführung) während eines jeweiligen Dosierzustands bzw. Dosierzyklusses die Dosiermenge pro Zeiteinheit zunächst hochfahren und anschliessend wieder herunterfahren, wobei die Dosierleistung insbesondere den Verlauf eines Dreieck-Dosierimpulses aufweist. Dadurch und vorzugsweise ebenfalls in Verbindung mit den weiter oben genannten Massnahmen zur Erzielung scharfer Übergänge der Produkteigenschaften bei Verwendung von Rechteck-Dosierimpulsen lassen sich verschwommene bzw. in gezielter Weise linear graduelle Übergänge zwischen den kontinuierlich hergestellten wechselnden Abfolgen verschiedener Sorten eines Artikels erzielen.

Anstelle von Dosierraten-Verläufen auf Basis von Rechteck- oder Dreieck-Dosierimpulsen können auch sinusförmige Dosierraten-Verläufe verwendet werden.

Die Dauer eines Dosierimpulses oder Dosierzyklus kann prinzipiell beliebig gewählt werden. Bei der kontinuierlichen Herstellung von Verzehrprodukten aus einer angefeuchteten stärke- und/oder proteinhaltigen Rohmaterial-Masse verwendet man vorzugsweise eine Zustandsdauer bzw. eine Dauer eines Dosierzyklusses von etwa 2 min bis 10 min. Dadurch wird gewährleistet, dass bei den üblichen Extrudergrössen und den damit verbundenen Durchsätzen ein anschliessendes Mischen der fertigen Verzehrprodukte nicht zu aufwändig wird. Die Zustandsdauer bzw. die Dauer eines Dosierzyklusses, insbesondere bei scharfen rechteckförmigen Dosierraten-Verläufen, kann auch zwischen etwa 10s bis 40s gewählt werden. Dadurch lassen sich mit den üblichen Extrudergrössen und Durchsätzen, wenn man auf das Mischen der fertigen Verzehrprodukte verzichtet, Packungen mit verschiedenen Sorten des Verzehrproduktes, wie z.B. Packungen mit bunter, regenbogenartiger etc. Anordnung von Verzehrprodukten herstellen.

Vorzugsweise beträgt die Umschaltdauer zwischen unterschiedlichen Dosierzuständen etwa 0,1 s bis 1 s. Dies gewährleistet, vorzugsweise in Verbindung mit den weiter oben genannten Massnahmen, einen scharfen Übergang zwischen den verschiedenen Sorten der Verzehrprodukte.

Bei der kontinuierlichen Herstellung von Verzehrprodukten aus einer angefeuchteten stärke- und/oder proteinhaltigen Rohmaterial-Masse erfolgen insbesondere die folgenden weiteren Behandlungsschritte:
Beim Fördern und Verarbeiten der angefeuchteten Masse, kann eine Kochextrusion, insbesondere bei Temperaturen zwischen 90°C und 180°C, erfolgen, wonach beim Formen der mit einem Zusatzstoff versehenen Masse in einzelne den Zusatzstoff aufweisende Verzehrprodukte ein Expandieren der Verzehrprodukte erfolgt. So erhält man expandierte bzw. "gepuffte" Verzehrprodukte, die als Snack beliebt sind.

Beim Formen der mit einem Zusatzstoff versehenen Masse in einzelne den Zusatzstoff aufweisende Verzehrprodukte kann auch ein Flockieren der Verzehrprodukte erfolgen.

Beim Fördern und Verarbeiten der angefeuchteten Masse kann eine Kaltextrusion, insbesondere bei Temperaturen zwischen 35°C und 90°C, erfolgen, wobei nach dem Formen der mit einem Zusatzstoff versehenen Masse in einzelne einen Zusatzstoff aufweisende Verzehrprodukte ein Trocknen der Verzehrprodukte erfolgt.

Beim Formen der mit einem Zusatzstoff versehenen Masse in einzelne den Zusatzstoff aufweisende Verzehrprodukte kann auch ein Eingeben der Verzehrprodukte in ein Flüssigkeitsbad, insbesondere in ein heisses Ölbad, erfolgen. So erhält man frittierte Verzehrprodukte. Diese können auch vor dem Frittieren expandiert werden, wie weiter oben beschrieben.

Besonders zweckmässig ist es, wenn als Zusatzstoff mindestens ein Farbstoff zudosiert wird. Allein durch eine solche farbliche Beeinflussung wird das Verzehrprodukt insbesondere für Kinder ansprechender.

Als mindestens ein Zusatzstoff wird mindestens ein Farbstoff und/oder mindestens ein Aromastoff zudosiert. Somit lässt sich der optische Eindruck des so hergestellten Verzehrproduktes mit einem geschmacklichen Eindruck verbinden, wobei die Zudosierung eines Farbstoffes und die Zudosierung eines zum Farbstoff korrespondierenden Aromastoffes vorzugsweise synchron, insbesondere phasengleich, erfolgen.

Die Zudosierung eines ersten Farbstoffes und/oder Aromastoffes und die Zudosierung eines zweiten Farbstoffes und/oder Aromastoffes können auch gezielt asynchron, insbesondere gegenphasig, erfolgen. Dadurch lassen sich mit relativ wenigen Sorten von Zusatzstoffen, d.h. mit relativ wenigen Farbstoffen und/oder relativ wenigen Aromastoffen, zahlreiche Farbtöne und Geschmacksrichtungen für die einzelnen Verzehrprodukte erzielen, die dem Kunden letztendlich allesamt gut durchmischt in einer Packung angeboten werden.

Weitere Vorteile, Merkmale und Anwendungsmöglichkeiten der Erfindung ergeben sich aus der nun folgenden Beschreibung eines nicht einschränkend aufzufassenden Ausführungsbeispiels der Erfindung, wobei:
- Fig. 1: ein Schaltschema einer angewandten Vorrichtung zur Herstellung eines Verzehrproduktes zeigt;
- Fig. 2: eine vergrösserte, teilweise in einem Vertikalschnitt dargestellte Ansicht eines Abschnitts der angewandten Vorrichtung von Fig. 1 zeigt; und
- Fig. 3: einen zeitlichen Dosierverlauf von Zusatzstoffen bei einem erfindungsgemässen Verfahren zeigt.

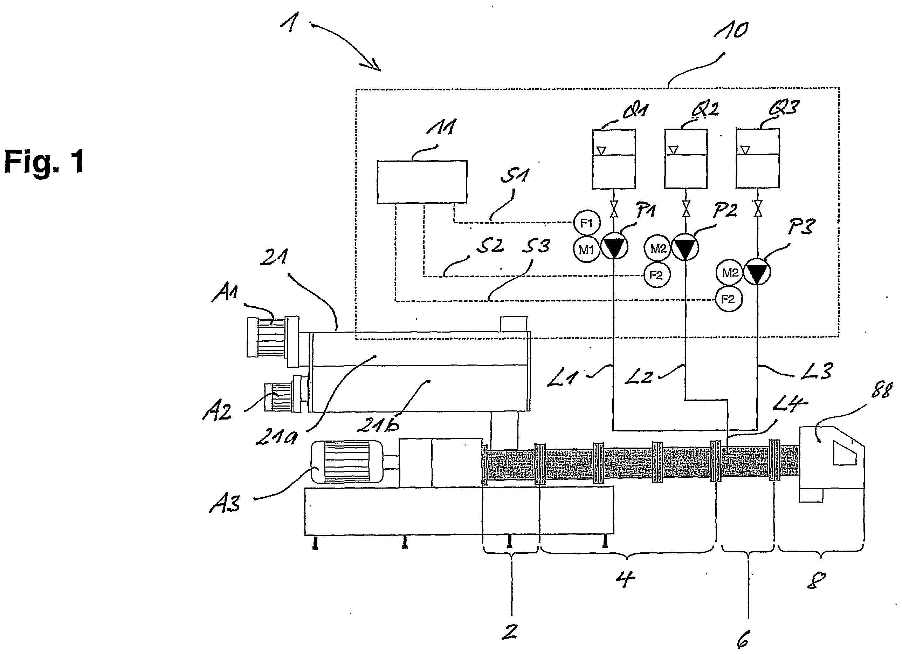

In Fig. 1 ist ein Schaltschema einer angewandten Vorrichtung 1 zum kontinuierlichen Herstellen einer mindestens zwei unterschiedliche Sorten von Artikeln aufweisenden Vielzahl von Artikeln aus einer pastösen Masse, vorzugsweise zur kontinuierlichen Herstellung von Verzehrprodukten aus einer angefeuchteten stärke- und/oder proteinhaltigen Rohmaterial-Masse.

Die Vorrichtung 1 umfasst im wesentlichen eine Prozesseinheit 4 mit Förderelementen zum Verarbeiten und Fördern der Masse, eine Zufuhreinheit 2 zum Zuführen der Masse in die Prozesseinheit 4, eine Dosiereinheit 10 zum Eindosieren eines Zusatzstoffes in die durch die Prozesseinheit (4) hindurch geförderte Masse, eine Mischeinheit 6 mit Mischelementen förderabseitig von der Prozesseinheit 4 zum Einmischen des eindosierten Zusatzstoffes in die Masse sowie eine Formeinheit 8 mit Formelementen förderabseitig von der Mischeinheit 6 zum Formen der mit einem Zusatzstoff versehenen Masse zu einzelnen Artikeln.

Die Dosiereinheit 10 ist über eine erste Schalteinheit F1, M1, P1, über eine zweite Schalteinheit F2, M2, P2 und über eine dritte Schalteinheit F3, M3, P3 mit jeweils einer ersten Quelle Q1, einer zweiten Quelle Q2 und einer dritten Quelle Q3 für einen jeweiligen Zusatzstoff verbunden. Die erste Schalteinheit enthält ein erstes Stellglied F1, einen ersten Antriebsmotor M1 und eine erste Pumpe P1. Die zweite Schalteinheit enthält ein zweites Stellglied F2, einen zweiten Antriebsmotor M2 und eine zweite Pumpe P2. Die dritte Schalteinheit enthält ein drittes Stellglied F3, einen dritten Antriebsmotor M3 und eine dritte Pumpe P3. Die Stellglieder F1, F2 und F3 werden von einer zentralen Steuerung 11 über jeweilige Leitungen S1, S2 und S3 angesteuert und stellen aufgrund des von der Steuerung 11 über die Leitungen S1, S2 und S3 vorgegebenen Signals die Drehzahl der jeweiligen Antriebsmotoren M1, M2 bzw. M3 ein, wodurch die Pumpleistung der jeweiligen Pumpen P1, P2 bzw. P3 bestimmt wird. Die Pumpen P1, P2 und P3 sind jeweils mit der Quelle Q1, Q2 bzw. Q3 für einen jeweiligen Zusatzstoff verbunden.

Als Stellglieder F können auch Drehzahlregler (Frequenzumformer) verwendet werden. Alternativ können auch andere Formen der Mengenregelung verwendet werden, wie z.B. Stellventile. Die Drehzahlregelung wird aber bevorzugt. Eine weitere Alternative besteht darin, dass der Istwert durch einen Durchflussmesser erfasst wird. Dies ermöglicht anstatt einer einfachen Steuerung in einer weiterführenden Ausführung eine Regelung der Dosiermengen.

Somit wird über die durch die Steuerung 11 vorgegebene Drehzahl der jeweiligen Pumpen P1, P2 und P3 die Dosierrate der jeweiligen Zusatzstoffe aus den Quellen Q1, Q2 bzw. Q3 bestimmt, die über die Leitungen L1, L2 bzw. L3 und eine gemeinsame Leitung bzw. Sammelleitung L4 der Mischeinheit 6 zugeführt werden. Anstatt der Sammelleitung L4, die an einem Punkt in die Mischeinheit mündet, können die drei Leitungen L1, L2 und L3 auch separat in die Mischeinheit 6 einmünden, wobei die Mündungspunkte dieser drei Leitungen vorzugsweise dicht beieinander liegen. Sie können dann entweder einen kurzen axialen Abstand voneinander haben oder an ein und derselben axialen Position, dafür aber entlang der Umfangsrichtung der Mischeinheit 6 verteilt angeordnet sein.

Im Betrieb werden die erste Schalteinheit F1, M1, P1, die zweite Schalteinheit F2, M2, P2 und die dritte Schalteinheit F3, M3, P3 in einen jeweiligen Schaltzustand geschaltet, in welchem die Dosiereinheit 10 den jeweiligen Zusatzstoff der Quellen Q1, Q2 bzw. Q3 mit einer jeweiligen Dosierrate in die Masse eindosiert.

Der Zufuhreinheit 2 ist ein Vorkonditionierer 21 vorgeschaltet, der zwei in Serie geschaltete Kammern 21a und 21b aufweist, in denen eine stärke- und/oder proteinhaltige Rohmaterial-Masse, wie z.B. Mehl oder Griess, vorkonditioniert wird. In jeder der beiden Kammern 21a und 21b des Vorkonditionierers 21 ist mindestens eine Welle mit schaufel- oder paddelartigen Werkzeugen enthalten, die durch eine Antriebseinheit A1 bzw. A2 angetrieben wird. In der ersten Kammer 21a verweilt das Rohmaterial nur kurzzeitig, um mit Wasser benetzt zu werden (Fluidisierung, Schnellmischer), während das so benetzte Rohmaterial in der zweiten Kammer 21b ausreichend lange verweilt, damit das Wasser an der Oberfläche der stärke- und/oder proteinhaltigen Rohmaterial-Partikel in die Partikel eindiffundieren kann.

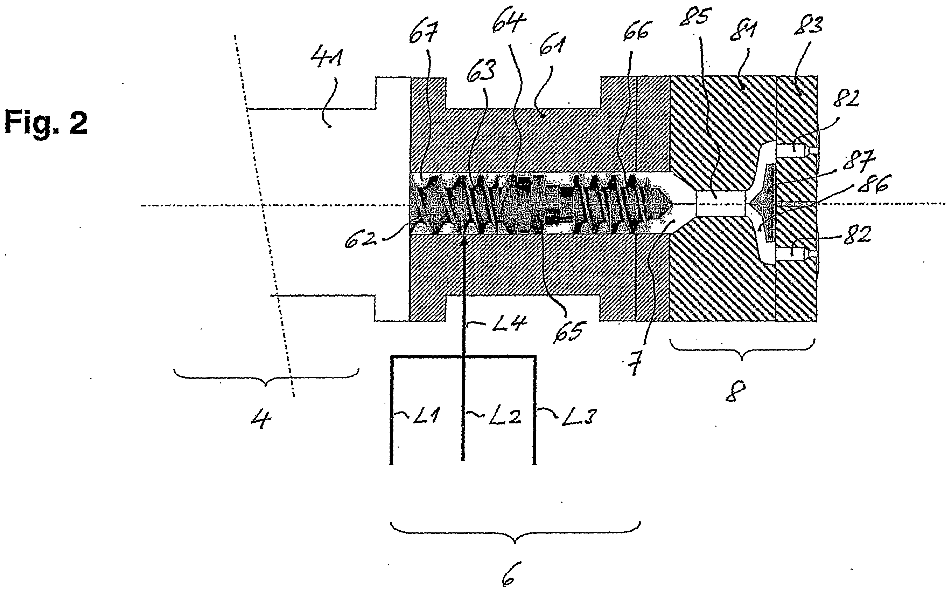

Die Zufuhreinheit 2, die Prozesseinheit 4 mit Förderelementen und die Mischeinheit 6 der Vorrichtung 1 sind durch unterschiedliche axiale Bereiche eines Zweiwellen-Extruders 2, 4, 6 gebildet, dessen Bearbeitungswellen durch eine Antriebseinheit A3 angetrieben werden. Die Zufuhreinheit 2 und die Prozesseinheit 4 enthalten fördernde Schneckenelemente (nicht gezeigt), während die Mischeinheit 6 zumindest Mischelemente, z.B. In Form von Knetblöcken 65 (siehe Fig. 2) und/oder Igeln aufweist, da man die Masse auch allein durch die Förderwirkung der Zufuhreinheit 2 und der Prozesseinheit 4 durch die Mischeinheit 6 befördern könnte. Vorzugsweise enthält die Mischeinheit 6 aber sowohl vorwärts fördernde als auch rückwärts fördernde Schneckenelemente sowie Knetblöcke und/oder Igel (siehe Fig. 2).

Die Prozesseinheit 4 kann als Kaltextrusions-Einheit z.B. zur Herstellung von Teigwaren oder als Kochextrusions-Einheit z.B. zur Herstellung von Snacks ausgebildet sein. Entsprechend kann der mit einer (nicht gezeigten) Schneideinrichtung ausgestatteten Formeinheit 8 eine Trocknungseinheit (nicht gezeigt) zum Trocknen der zu Teigwaren geformten Masse bzw. eine Expansionseinheit 88 zum Expandieren der zu Snacks kochextrudierten Masse nachgeschaltet sein.

In Fig. 2 ist eine vergrösserte, teilweise in einem Vertikalschnitt dargestellte Ansicht eines Abschnitts der angewandten Vorrichtung 1 von Fig. 1 gezeigt. Das Gehäuse 41 der Prozesseinheit 4 (siehe Fig. 1) ist nur partiell angedeutet, während die Mischeinheit 6 und die Formeinheit 8 als Ansicht eines Vertikalschnitts durch eine der Achsen des Zweiwellen-Extruders 2, 4, 6 dargestellt sind, wobei eine der beiden Mischwellen des Zweiwellen-Extruders 2, 4, 6 als Seitenansicht (nicht geschnitten) gezeigt ist.

Die Mischeinheit 6 enthält in ihrem Gehäuse 61 zwei Bearbeitungswellen, die jeweils einen axialen Teilbereich der beiden Wellen des Zweiwellen-Extruders 2, 4, 6 bilden. Jede der Bearbeitungswellen enthält der Reihe nach in Förderichtung einen Bereich mit vorwärts fördernden Schneckenelementen ("Rechtselemente") 62, 63 mit abnehmender Steigung, einen Bereich mit rückwärts fördernden Schneckenelementen 64, einen Bereich mit Knetblöcken 65 sowie einen weiteren Bereich mit vorwärts fördernden Schneckenelementen 66. Durch die rückwärts fördernden Schneckenelemente ("Linkselemente") 64 ergibt sich in dem Mischraum 67 durch die in diesem Bereich während ihres Transports aufgestaute Masse eine Abdichtung gegenüber der Prozesskammer der Prozesseinheit 4. Vor allem trägt das Linkselement aber auch zur Erhöhung der Mischintensität bei.

Die Formeinheit 8 enthält in ihrem Gehäuse 81 keine beweglichen Teile. Stattdessen ist sie totvolumenfrei ausgebildet, um jegliche Verschleppung von Teilen der Masse sowie der in sie eindosierten Zusatzstoffe zu minimieren. Der Übergang 7 zwischen dem Mischraum 67 der Mischeinheit 6 und dem sich über einen axialen Teilbereich der Formeinheit 8 erstreckenden Hohlraum 85 ist an seiner Innenfläche ohne scharfe Kanten, Grate oder Stege ausgebildet, wobei derartige Gebilde als Bereiche mit einem kleinen Krümmungsradius quantifizierbar sind. An den Hohlraum 85 schliesst sich förderabseitig ein kranzartiger Hohlraum 86 an, der sich zwischen dem Gehäuse 81 und einem spitz zulaufenden Kern 87 erstreckt und weiter förderabseitig schliesslich in eine Vielzahl von Düsen 82 mündet, die in einer an dem Gehäuse 81 befestigten Düsenplatte 83 vorgesehen sind. Ausserhalb der Düsenplatte 83 ist eine Schneideinheit, z.B. in Form rotierender Messer angeordnet, um die durch die Düsen 82 austretenden Massestränge in kleine Teilchen zu schneiden, die dann in einem (nicht gezeigten) Trockner getrocknet oder in der Expansionseinheit 88 expandiert werden.

Die Zudosierung von Zusatzstoffen aus den Quellen Q1, Q2 und Q3 (siehe Fig. 1) erfolgt über die Leitungen L1, L2 bzw. L3, die sich zu einer gemeinsamen Leitung L4 vereinen. Diese gemeinsame Leitung L4 mündet durch das Gehäuse 61 der Mischeinheit 6 in die Mischkammer 67 förderaufseitig (stromauf) von den Mischelementen bzw. den Knetblöcken 65 der Bearbeitungswelle.

Die Dosiereinheit 10 (siehe Fig. 1) ist somit über die Leitung L4 in einem axialen Teilbereich der Mischeinheit 6 angeschlossen, der förderaufseitig von dem axialen Teilbereich mit den Knetelementen 65 liegt.

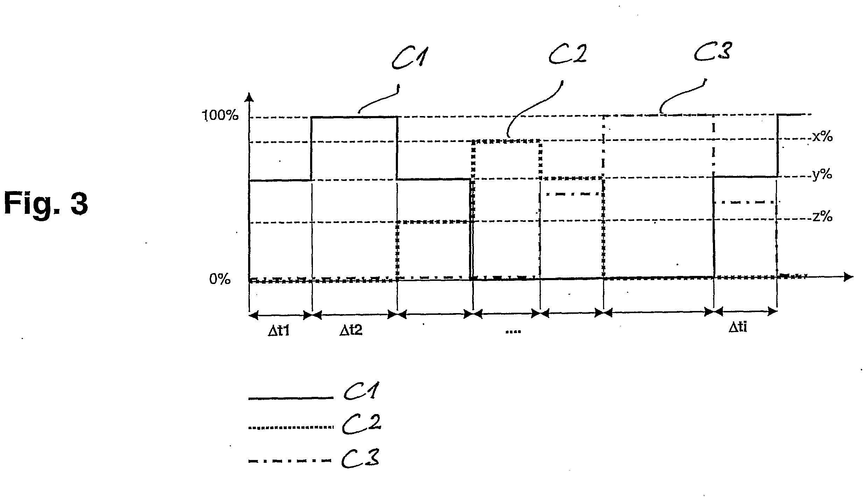

In Fig. 3 ist ein zeitlicher Dosierverlauf für die Zudosierung dreier verschiedener Zusatzstoffe gezeigt. Als Zusatzstoffe werden hier drei verschiedene Farben zudosiert, wobei die Farbe C1 über die Leitung L1, die Farbe C2 über die Leitung L2 und die Farbe C3 über die Leitung L3 zudosiert wird. Der zeitliche Dosierraten-Verlauf der Farben C1, C2 und C3 ist als durchgezogene Linie, als punktierte Linie bzw. als strichpunktierte Linie gezeigt. Die Zugabe der jeweiligen Farben C1, C2 und C3 erfolgt sequentiell und ist während vorgegebener Zeitintervalle Δti jeweils konstant. Die hier verwendeten Dosierraten sind maximal (Maximalwert, 100%), ein Zwischenwert (100% > x% > y% > z%) oder Null (Minimalwert, 0%). Durch geeignete Farbkombinationen und Dosierraten-Kombinationen lassen sich zu jedem Zeitpunkt t bestimmte Färbungen der Masse erzielen. Durch Verwendung geeigneter Grundfarben für die additive Farbmischung lassen sich durch geeignete Mischungsverhältnisse praktisch alle Farbtöne und Farbintensitäten einstellen. Durch sehr kurze Umschaltdauern von ca. 0,1 s bis 0,3 s und Verweilzeiten Δti von einigen 10 s bis einigen Minuten mit einer jeweils konstanten Dosierrate entstehen Rechteck-Dosierimpulse. Dies hat zur Folge, dass bei den Übergängen von einem ersten Dosierzustand (erster Mischungszustand) zu einem nächsten Dosierzustand (nächster Mischungszustand) scharfe Übergänge entstehen. Dies hat zur Folge, dass die weitaus meisten der so eingefärbten Gebrauchsartikel oder Verzehrprodukte eine gleiche Färbung erhalten, die auf die konstanten Dosierraten während der Zeitintervalle Δti zurückzuführen sind. Nur sehr wenige der eingefärbten Gebrauchsartikel oder Verzehrprodukte nehmen eine Zwischen- oder Übergangsfärbung ein.

## Patentansprüche

1. Verfahren zum kontinuierlichen Herstellen einer mindestens zwei unterschiedliche Sorten von Artikeln aufweisenden Vielzahl von Artikeln aus einer pastösen Masse, unter Verwendung einer Vorrichtung (1),
wobei die Vorrichtung Folgendes aufweist:
> eine Schneckenpresse, deren unterschiedliche axiale Bereiche gebildet sind durch
> eine Prozesseinheit (4) mit Förderelementen zum Verarbeiten und Fördern der Masse;
> förderabseitig (stromab) von der Prozesseinheit (4): eine Mischeinheit (6) mit Mischelementen;
> eine Dosiereinheit (10) zum Eindosieren eines Zusatzstoffes in die durch die Prozesseinheit (4) geförderte Masse, welche Dosiereinheit (10) über mindestens eine Schalteinheit (F1, M1, P1, F2, M2, P2, F3, M3, P3) mit mindestens einer Quelle (Q1, Q2, Q3) für einen jeweiligen Zusatzstoff verbunden ist, wobei eine jeweilige Schalteinheit (F1, M1, P1, F2, M2, P2, F3, M3, P3) in einen Schaltzustand schaltbar ist, in welchem die Dosiereinheit (10) den jeweiligen Zusatzstoff mit einer jeweiligen Dosierrate in die Masse eindosieren kann;
> eine nach der Prozesseinheit (4) und förderabseitig von der Mischeinheit (6) vorgesehene Formeinheit (8) mit Formelementen zum Formen der mit einem Zusatzstoff versehenen Masse zu einzelnen Artikeln,
wobei das Verfahren die folgenden Schritte aufweist:
> Zuführen der Masse mittels einer Zufuhreinheit (2) in die Prozesseinheit (4);
> Fördern und Verarbeiten der Masse durch die Prozesseinheit (4) hindurch;
> Eindosieren eines Zusatzstoffes mittels der Dosiereinheit (10) in die durch die Prozesseinheit (4) hindurch geförderte Masse;
> Einmischen des eindosierten Zusatzstoffes in die Masse mittels der Mischeinheit (6);
> Formen der mit dem Zusatzstoff versehenen Masse zu einzelnen Artikeln mittels der Formeinheit (8) mit Formelementen, wobei die Zusatzstoffe der Mischeinheit (6) zugeführt werden und das Eindosieren von Zusatzstoff in einer mindestens zwei verschiedene Dosierzustände aufweisenden Abfolge von Dosierzuständen erfolgt, wobei die Dosiereinheit in einem jeweiligen Dosierzustand den Zusatzstoff mit einer jeweiligen Dosierrate in die Masse eindosiert, und dass die Zustandsdauer bzw. die Dauer eines Dosierzyklus etwa 10 s bis 40 s beträgt.

2. Verfahren nach Anspruch 1, **dadurch gekennzeichnet, dass** nach dem Formen der Artikel ein Verfestigen der Artikel erfolgt und dass nach oder während des Verfestigens der einzelnen Artikel ein Durchmischen der verfestigten bzw. sich verfestigenden Artikel erfolgt.

3. Verfahren nach einem der Ansprüche 1 und 2 zur kontinuierlichen Herstellung von Verzehrprodukten aus einer angefeuchteten stärke- und/oder proteinhaltigen Rohmaterial-Masse, **dadurch gekennzeichnet, dass** das Fördern und Verarbeiten der Rohmaterial-Masse entweder durch Kochextrusion oder durch Kaltextrusion erfolgt.

4. Verfahren nach einem der Ansprüche 1 bis 3, **dadurch gekennzeichnet, dass** die Dosiereinheit in einem ersten Dosierzustand einen Zusatzstoff mit einer ersten Dosiermenge in die Masse eindosiert und die Dosiereinheit in einem zweiten Dosierzustand einen Zusatzstoff mit einer zweiten Dosiermenge in die Masse eindosiert.

5. Verfahren nach Anspruch 4, **dadurch gekennzeichnet, dass** beim Dosieren der erste Zustand und der zweite Zustand abwechselnd aufeinander folgen.

6. Verfahren nach Anspruch 4 oder 5, **dadurch gekennzeichnet, dass** ein erster Zusatzstoff und ein zweiter Zusatzstoff eindosiert werden, wobei in einem ersten Zustand ein erstes Dosiermengen-Mischungsverhältnis aus dem ersten und dem zweiten Zusatzstoff in die Masse eindosiert wird und in einem zweiten Zustand ein zweites Dosiermengen-Mischungsverhältnis aus dem ersten und dem zweiten Zusatzstoff in die Masse eindosiert wird.

7. Verfahren nach Anspruch 6, **dadurch gekennzeichnet, dass** in einem dritten Dosierzustand ein drittes Dosiermengen-Mischungsverhältnis aus dem ersten und dem zweiten Zusatzstoff in die Masse eindosiert wird.

8. Verfahren nach einem der Ansprüche 4 bis 7, **dadurch gekennzeichnet, dass** in dem ersten Dosierzustand nur eine erste Sorte Zusatzstoff mit einer ersten Dosiermenge eindosiert wird.

9. Verfahren nach Anspruch 8, **dadurch gekennzeichnet, dass** in dem zweiten Dosierzustand nur eine zweite Sorte Zusatzstoff mit einer zweiten Dosiermenge eindosiert wird.

10. Verfahren nach einem der Ansprüche 7 bis 9, **dadurch gekennzeichnet, dass** in dem dritten Dosierzustand die erste Sorte Zusatzstoff und die zweite Sorte Zusatzstoff gleichzeitig mit der ersten Dosiermenge bzw. mit der zweiten Dosiermenge eindosiert werden.

11. Verfahren nach einem der Ansprüche 1 bis 10, **dadurch gekennzeichnet, dass** während eines jeweiligen Dosierzustands bzw. Dosierzyklus die Dosiermenge pro Zeiteinheit konstant gehalten wird, wobei die Dosierleistung insbesondere den Verlauf eines Rechteck-Dosierimpulses aufweist.

12. Verfahren nach einem der Ansprüche 1 bis 10, **dadurch gekennzeichnet, dass** während eines jeweiligen Dosierzustands bzw. Dosierzyklus die Dosiermenge pro Zeiteinheit zunächst hochgefahren und anschliessend wieder heruntergefahren wird, wobei die Dosierleistung insbesondere den Verlauf eines Dreieck-Dosierimpulses aufweist.

13. Verfahren nach einem der Ansprüche 1 bis 12, **dadurch gekennzeichnet, dass** die Umschaltdauer zwischen unterschiedlichen Dosierzuständen etwa 0,1 s bis 1 s beträgt.

14. Verfahren nach einem der Ansprüche 3 bis 13, **dadurch gekennzeichnet, dass** als Zusatzstoff mindestens ein Farbstoff und/oder mindestens ein Aromastoff zudosiert wird.

15. Verfahren nach einem der Ansprüche 1 bis 14, **dadurch gekennzeichnet, dass** die Zusatzstoffe der Mischeinheit (6) entweder über eine gemeinsame Leitung bzw. Sammelleitung (L4) oder über drei separat in die Mischeinheit (6) einmündende Leitungen (L1, L2, L3) zugeführt werden, insbesondere über Leitungen, deren Mündungspunkte dicht beieinander liegen und/oder entlang der Umfangsrichtung der Mischeinheit (6) verteilt angeordnet sind.

## Claims

1. A method for continuously producing a multiplicity of articles comprising at least two different types of articles from a pasty mass, using a device, wherein the device contains the following:
- an extruder whose different axial regions are formed by
- a processing unit (4) with transporting elements for processing and transporting the mass;
- downstream of the processing unit (4): a mixing unit (6) with mixing elements;
- a metering unit (10) for metering an additive into the mass transported through the processing unit (4), which metering unit (10) is connected by means of at least one one switching unit (F1, M1, P1, F2, M2, P2, F3, M3, P3) to at least one source (Q1, Q2, Q3) of a respective additive, wherein a respective switching unit (F1, M1, P1, F2, M2, P2, F3, M3, P3) can be switched into a switching state in which the metering unit (10) can meter the respective additive into the mass at a respective metering rate;
- a molding unit (8) provided downstream of the processing unit (4) and the mixing unit (6), with molding elements for molding the mass provided with an additive into individual articles,
wherein the method comprises the following steps:
- feeding the mass by means of a feeding unit (2) into the processing unit (4);
- transporting and processing the mass through the processing unit (4);
- metering an additive by means of the metering unit (10) into the mass transported through the processing unit (4);
- mixing the metered-in additive into the mass by means of the mixing unit (6);
- molding the mass provided with the additive into individual articles by means of the molding unit (8) with molding elements,
wherein the additives are fed into the mixing unit (6) and the metering in of the additive takes place in a sequence of metering states comprising at least two different metering states, the metering unit in a respective metering state metering the additive into the mass at a respective metering rate and wherein the state duration or the duration of a metering cycle is approximately 10 s to 40 s.

2. The method as claimed in claim 1, **characterized in that**, after the molding of the articles, setting of the articles is performed and that after or during the setting of the individual articles, mixing up of the set or setting articles is performed.

3. The method as claimed in one of claims 1 and 2 for the continuous production of comestibles from a moistened mass of raw material containing starch and/or protein, **characterized in that** the transporting and processing of the mass of raw material is performed either by extrusion-cooking or by cold extrusion.

4. The method as claimed in one of claims 1 to 3, **characterized in that** the metering unit, in a first metering state, meters into the mass an additive with a first metered amount, and the metering unit, in a second metering state, meters into the mass an additive with a second metered amount.

5. The method as claimed in claim 4, **characterized in that** the first state and the second state follow alternately one after the other during the metering.

6. The method as claimed in claim 5 or 6, **characterized in that** a first additive and a second additive are metered in, wherein in a first state, a first metered-amount mixing ratio of the first additive and the second additive is metered into the mass and, in a second state, a second metered-amount mixing ratio of the first additive and the second additive is metered into the mass.

7. The method as claimed in claim 6, **characterized in that**, in a third metering state, a third metered-amount mixing ratio of the first additive and the second additive is metered into the mass.

8. The method as claimed in one of claims 4 to 7, **characterized in that**, in the first metering state, only a first type of additive is metered in with a first metered amount.

9. The method as claimed in claim 8, **characterized in that**, in the second metering state, only a second type of additive is metered in with a second metered amount.

10. The method as claimed in one of claims 7 to 9, **characterized in that**, in the third metering state, the first type of additive and the second type of additive are simultaneously metered in with the first metered amount and with the second metered amount, respectively.

11. The method as claimed in one of claims 1 to 10, **characterized in that**, during a respective metering state or metering cycle, the metered amount per unit of time is kept constant, the metered output having in particular the profile of a square-wave metering pulse.

12. The method as claimed in one of claims 1 to 10, **characterized in that** the metered amount per unit of time is first run up and then run down again during a respective metering state or metering cycle, the metered output having in particular the profile of a triangular-wave metering pulse.

13. The method as claimed in one of claims 1 to 12, **characterized in that** the switching-over duration between different metering states is approximately 0.1 s to 1 s.

14. The method as claimed in one of claims 3 to 13, **characterized in that** at least one colorant and/or at least one flavoring is metered as an additive.

15. The method as claimed in one of claims 1 to 14, **characterized in that** the additives are fed into the mixing unit (6) either via a collective line (L4) or via three lines (L1, L2, L3) which open out separately into the mixing unit (6), in particular via lines whose opening-out points lie close together and/or are distributed along the circumferential direction of the mixing unit (6).

## Revendications

1. Procédé pour la production en continu d'une pluralité d'articles comportant au moins deux variétés différentes d'articles à partir d'une masse pâteuse, par utilisation d'un dispositif (1), dans lequel le dispositif comporte ce qui suit :
> une presse à vis, dont les zones axiales différentes sont formées par
> une unité de processus (4) dotée d'éléments transporteurs pour le traitement et le transport de la masse ;
> en aval de l'unité de processus (4) : une unité de mélange (6) dotée d'éléments mélangeurs ;
> une unité de dosage (10) pour introduire un adjuvant dans la masse transportée par l'unité de processus (4), cette unité de dosage (10) étant connectée au moyen d'au moins une unité de commutation (F1, M1, P1, F2, M2, P2, F3, M3, P3) à au moins une source (Q1, Q2, Q3) d'un adjuvant, dans laquelle une unité de commutation (F1, M1, P1, F2, M2, P2, F3, M3, P3) est commutable dans un état de commutation, dans laquelle l'unité de dosage (10) peut introduire l'adjuvant respectif dans la masse à une vitesse de dosage respective ;
> une unité de moule (8) prévue après l'unité de processus (4) et en aval de l'unité de mélange (6) dotée d'éléments de moule pour le moulage de la masse pourvue d'adjuvant en articles individuels,
dans lequel le processus comporte les étapes suivantes :
> apport de la masse dans l'unité de processus (4) au moyen d'une unité d'alimentation (2) ;
> transport et traitement de la masse au travers de l'unité de processus (4) ;
> ajout d'un adjuvant au moyen de l'unité de dosage (10) dans la masse transportée au travers de l'unité de processus (4) ;
> incorporation de l'adjuvant ajouté à la masse au moyen de l'unité de mélange (6) ;
> moulage de la masse pourvue en adjuvant en articles individuels au moyen de l'unité de moule (8) dotée d'éléments de moule,
dans lequel l'adjuvant est apporté à l'unité de mélange (6) et l'ajout de l'adjuvant se fait en une succession d'états de dosage comportant au moins deux états de dosage, dans lequel l'unité de dosage introduit l'adjuvant dans la masse dans un état de dosage respectif à une vitesse d'introduction, la durée de l'état ou du cycle d'introduction étant comprise entre 10 s et 40 s.

2. Procédé selon la revendication 1, **caractérisé en ce qu'**une solidification de l'article a lieu après son moulage et **en ce qu'**après ou pendant la solidification des articles individuels un mélange des articles solidifiés ou en cours de solidification se produit.

3. Procédé selon l'une des revendications 1 ou 2 pour la production en continu de compléments alimentaires à partir d'une masse humidifiée de matériau brut contenant de l'amidon et/ou des protéines, **caractérisé en ce que** le transport et le traitement de la masse ont lieu soit par cuisson-extrusion soit par extrusion à froid.

4. Procédé selon l'une des revendications 1 à 3, **caractérisé en ce que** l'unité de dosage introduit dans un premier état de dosage un premier volume de dosage d'adjuvant dans la masse et introduit dans un second état de dosage un second volume de dosage d'adjuvant dans la masse.

5. Procédé selon la revendication 4, **caractérisé en ce que** lors de l'introduction le premier état et le second état se suivent l'un l'autre de façon alternée.

6. Procédé selon la revendication 4 ou 5, **caractérisé en ce qu'**un premier adjuvant et un second adjuvant sont introduits, dans lequel, dans un premier état de dosage, un premier rapport de mélange de volumes de dosage du premier et du second adjuvant est introduit dans la masse et, dans un second état de dosage, un second rapport de mélange de volumes de dosage du premier et du second adjuvant est introduit dans la masse.

7. Procédé selon la revendication 6, **caractérisé en ce que**, dans un troisième état de dosage, un troisième rapport de mélange de volumes de dosage du premier et du second adjuvant est introduit dans la masse.

8. Procédé selon l'une des revendications 4 à 7, **caractérisé en ce que** dans le premier état de dosage seule une première sorte d'adjuvant est introduite dans un premier volume de dosage.

9. Procédé selon la revendication 8, **caractérisé en ce que** dans le second état de dosage seule une seconde sorte d'adjuvant est introduite dans un second volume de dosage.

10. Procédé selon l'une des revendications 7 à 9, **caractérisé en ce que** dans le troisième état de dosage la première sorte d'adjuvant et la seconde sorte d'adjuvant sont introduites simultanément avec le premier volume de dosage et le second volume de dosage respectivement.

11. Procédé selon l'une des revendications 1 à 10, **caractérisé en ce qu'**au cours d'un état de dosage ou cycle de dosage le volume de dosage par unité de temps est maintenu constant, dans lequel le débit de dosage présente en particulier un profil d'impulsions de dosage rectangulaires.

12. Procédé selon l'une des revendications 1 à 10, **caractérisé en ce qu'**au cours d'un état de dosage ou cycle de dosage le volume de dosage par unité de temps est d'abord croissant et ensuite décroissant, dans lequel le débit de dosage présente en particulier un profil d'impulsions de dosage triangulaires.

13. Procédé selon l'une des revendications 1 à 12, **caractérisé en ce que** la durée de commutation entre différents états de dosage est comprise entre 0,1 s et 1 s.

14. Procédé selon l'une des revendications 3 à 13, **caractérisé en ce qu'**au moins un colorant et/ou un arôme sont ajoutés en tant qu'adjuvants.

15. Procédé selon l'une des revendications 1 à 14, **caractérisé en ce que** les adjuvants de l'unité de mélange (6) sont ajoutés soit sur un conduit commun ou un tube collecteur (L4) soit sur trois conduits (L1, L2, L3) débouchant séparément dans l'unité de mélange (6), en particulier sur des conduits dont les embouchures sont disposées conjointement l'une à l'autre et/ou sont réparties le long du joint périphérique de l'unité de mélange (6).
